(19) Europäisches Patentamt
European Patent Office
Office européen des brevets

(11) Veröffentlichungsnummer: **0 116 931 B1**

(12) **EUROPÄISCHE PATENTSCHRIFT**

(45) Veröffentlichungstag der Patentschrift: **06.08.86**

(51) Int. Cl.⁴: **C 07 C 103/38**, C 08 K 5/20

(21) Anmeldenummer: **84101464.0**

(22) Anmeldetag: **13.02.84**

(54) **Oxalsäurediarylamide und deren Verwendung als UV-Absorber und damit ausgerüstete polymere Substrate.**

(30) Priorität: **18.02.83 DE 3305638**

(43) Veröffentlichungstag der Anmeldung: **29.08.84 Patentblatt 84/35**

(45) Bekanntmachung des Hinweises auf die Patenterteilung: **06.08.86 Patentblatt 86/32**

(84) Benannte Vertragsstaaten: **CH DE FR GB IT LI NL**

(56) Entgegenhaltungen:
**DE - A - 1 907 403**
**GB - A - 1 156 365**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Neumann, Peter, Dr., Franz-Schubert-Strasse 1, D-6908 Wiesloch (DE)**
Erfinder: **Hettche, Albert, Dr., Kleiststrasse 12, D-6717 Hessheim (DE)**
Erfinder: **Weiss, Stefan, Dr., Carl-Beck-Strasse 46, D-6903 Neckargemuend (DE)**
Erfinder: **Trauth, Hubert, Mlianstrasse 5, D-6724 Dudenhofen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

EP 0 116 931 B1

**Beschreibung**

Gegenstand der vorliegenden Erfindung sind Oxalsäurediarylamide, ihre Verwendung als UV-Absorber und das mit diesen Amiden gegen UV-Strahlen geschützte organische Material.

Es ist bereits aus der DE-PS 16 18 196 und den DE-OS 15 68 351, 19 07 403, 19 11 835 bekannt, dass bestimmte Oxalsäurediarylamide wirksame Lichtschutzmittel sind. Diese Verbindungen erfüllen jedoch nur teilweise die an Stabilisatoren zu stellenden Anforderungen.

Beispielsweise ist die Verträglichkeit mit bestimmten Substraten, insbesondere mit Polyolefinen, ungenügend, so dass bei längerer Lagerung der Stabilisator ausschwitzt.

Ausserdem verursachen die bekannten Oxalsäurediarylamide mehr oder weniger starke Verfärbungen der Massen, in die sie zum Zweck der Stabilisierung eingearbeitet sind, wenn diese thermisch hoch beansprucht oder intensiver Licht- oder Ultraviolettbestrahlung ausgesetzt werden.

Aufgabe der vorliegenden Erfindung war es als UV-Absorber geeignete neue Oxalsäurediarylamide bereitzustellen, welche im Vergleich zum Stand der Technik verbesserte Gebrauchseigenschaften aufweisen.

Es wurden Oxalsäurediarylamide der Formel

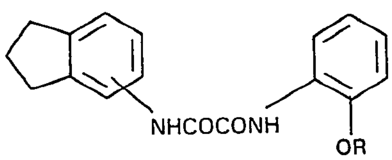

(I),

gefunden, in der R lineares oder verzweigtes $C_1$- bis $C_{12}$-Alkyl bedeutet, die als UV-Absorber in polymeren Substraten ganz besonders geeignet sind.

Bevorzugt sind Verbindungen der Formel (I), in der R Methyl, Ethyl oder lineares $C_8$- bis $C_{12}$-Alkyl bedeutet.

Besonders bevorzugt sind Verbindungen der Formel (I), in der R Methyl, Ethyl, n-Octyl, n-Decyl oder n-Dodecyl bedeutet und die Oxalsäureamidgruppe in der 4- oder 5-Stellung am Indan steht.

Als erfindungsgemässe Oxalsäureamide sind im einzelnen beispielsweise zu nennen:

N-(2-Methoxyphenyl)-N'-(4-indanyl)oxalsäureamid
N-(2-Methoxyphenyl)-N'-(5-indanyl)oxalsäureamid
N-(2-Ethoxyphenyl)-N'-(4-indanyl)oxalsäureamid
N-(2-Ethoxyphenyl)-N'-(5-indanyl)oxalsäureamid
N-(2-Propoxyphenyl)-N'-(4-indanyl)oxalsäureamid
N-(2-Propoxyphenyl)-N'-(5-indanyl)oxalsäureamid
N-(2-Isopropoxyphenyl)-N'-(4-indanyl)oxalsäureamid
N-(2-Isopropoxyphenyl)-N'-(5-indanyl)oxalsäureamid
N-(2-Butoxyphenyl)-N'-(4-indanyl)oxalsäureamid
N-(2-Butoxyphenyl)-N'-(5-indanyl)oxalsäureamid
N-[2-(1-Methylpropoxy)phenyl]-N'-(4-indanyl)oxalsäureamid
N-[2-(1-Methylpropoxy)phenyl]-N'-(5-indanyl)oxalsäureamid
N-[2-(2-Methylpropoxy)phenyl]-N'-(4-indanyl)oxalsäureamid
N-[2-(2-Methylpropoxy)phenyl]-N'-(5-indanyl)oxalsäureamid
N-(2-Phentoxyphenyl)-N'-(4-indanyl)oxalsäureamid
N-(2-Phentoxyphenyl)-N'-(5-indanyl)oxalsäureamid
N-[2-(1-Methylbutoxy)phenyl]-N'-(4-indanyl)oxalsäureamid
N-[2-(1-Methylbutoxy)phenyl]-N'-(5-indanyl)oxalsäureamid
N-[2-(2-Methylbutoxy)phenyl]-N'-(4-indanyl)oxalsäureamid
N-[2-(2-Methylbutoxy)phenyl]-N'-(5-indanyl)oxalsäureamid
N-[2-(3-Methylbutoxy)phenyl]-N'-(4-indanyl)oxalsäureamid
N-[2-(3-Methylbutoxy)phenyl]-N'-(5-indanyl)oxalsäureamid
N-[2-(2,2-Dimethylpropoxy)phenyl]-N'-(4-indanyl)-oxalsäureamid
N-[2-(2,2-Dimethylpropoxy)phenyl]-N'-(5-indanyl)-oxalsäureamid
N-(2-Hexoxyphenyl)-N'-(4-indanyl)oxalsäureamid
N-(2-Hexoxyphenyl)-N'-(5-indanyl)oxalsäureamid
N-[2-(1-Methylpentoxy)phenyl]-N'-(4-indanyl)oxalsäureamid
N-[2-(1-Methylpentoxy)phenyl]-N'-(5-indanyl)oxalsäureamid
N-[2-(1-Ethylbutoxy)phenyl]-N'-(4-indanyl)oxalsäureamid
N-[2-(1-Ethylbutoxy)phenyl]-N'-(5-indanyl)oxalsäureamid
N-(2-Heptoxyphenyl)-N'-(4-indanyl)oxalsäureamid
N-(2-Heptoxyphenyl)-N'-(5-indanyl)oxalsäureamid
N-[2-(1-Methylhexoxy)phenyl]-N'-(4-indanyl)oxalsäureamid
N-[2-(1-Methylhexoxy)phenyl]-N'-(5-indanyl)oxalsäureamid
N-[2-(1-Ethylpentoxy)phenyl]-N'-(4-indanyl)oxalsäureamid
N-[2-(1-Ethylpentoxy)phenyl]-N'-(5-indanyl)oxalsäureamid
N-[2-(1-Propylbutoxy)phenyl]-N'-(4-indanyl)oxalsäureamid
N-[2-(1-Propylbutoxy)phenyl]-N'-(5-indanyl)oxalsäureamid
N-(2-Octoxyphenyl)-N'-(4-indanyl)oxalsäureamid
N-(2-Octoxyphenyl)-N'-(5-indanyl)oxalsäureamid
N-[(2-Methylheptoxy)phenyl]-N'-(4-indanyl)oxalsäureamid
N-[(2-Methylheptoxy)phenyl]-N'-(5-indanyl)oxalsäureamid
N-[2-(1-Ethylhexoxy)phenyl]-N'-(4-indanyl)oxalsäureamid
N-[2-(1-Ethylhexoxy)phenyl]-N'-(5-indanyl)oxalsäureamid
N-[2-(2-Ethylhexoxy)phenyl]-N'-(4-indanyl)oxalsäureamid
N-[2-(2-Ethylhexoxy)phenyl]-N'-(5-indanyl)oxalsäureamid
N-(2-Nonoxyphenyl)-N'-(4-indanyl)oxalsäureamid
N-(2-Nonoxyphenyl)-N'-(5-indanyl)oxalsäureamid
N-(2-Decoxyphenyl)-N'-(4-indanyl)oxalsäureamid
N-(2-Decoxyphenyl)-N'-(5-indanyl)oxalsäureamid
N-(2-Undecoxyphenyl)-N'-(4-indanyl)oxalsäureamid

N-(2-Undecoxyphenyl)-N'-(5-indanyl)oxalsäureamid

N-(2-Dodecoxyphenyl)-N'-(4-indanyl)oxalsäureamid

N-(2-Dodecoxyphenyl)-N'-(5-indanyl)oxalsäureamid.

Die erfindungsgemässen Verbindungen der Formel (I) können nach an sich bekannten Verfahren hergestellt werden. Sie werden beispielsweise erhalten, indem man 4-Amino- oder 5-Aminoindan oder ein Gemisch dieser Amine mit einem Oxalsäurealkylesterchlorid der Formel (II),

$$ClCOCOOR^1 \quad (II),$$

in der $R^1$ $C_1$- bis $C_4$-Alkyl bedeutet, zweckmässigerweise in einem Lösungsmittel und in Anwesenheit eines Säureakzeptors zunächst zu einem Oxamidsäureester der Formel (III), in der $R^1$ die oben genannte Bedeutung hat, umsetzt und

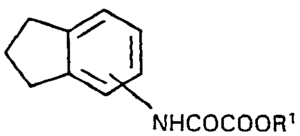
(III)

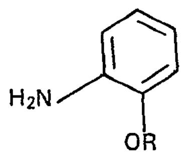
(IV)

diesen durch Reaktion mit einem aromatischen Amin der Formel (IV), in der R die oben genannte Bedeutung hat, in ein Oxalsäurebisarylamid der Formel (I) überführt. Die Oxamidsäureester der Formel (III) sind auch aus 4-Amino- oder 5-Aminoindan oder einem Gemisch dieser Amine durch Umsetzung mit Oxalsäurediethylester, vorzugsweise in Gegenwart von Borsäure oder Bortrifluoridetherat, erhältlich.

Selbstverständlich kann man auch nach den oben beschriebenen Verfahren zuerst einen Oxamidsäureester der Formel (V), in der R und $R^1$

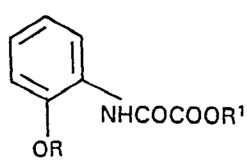
(V)

die oben genannte Bedeutung haben, herstellen und diesen mit 4-Amino- oder 5-Aminoindan oder einem Gemisch dieser Amine zu einem Oxalsäureamid der Formel I umsetzen.

Zur Darstellung der erfindungsgemässen Verbindungen (I) kann man auch von einer Oxamidsäure der Formel (VI) oder (VII),

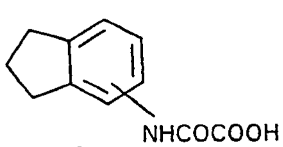
(VI)

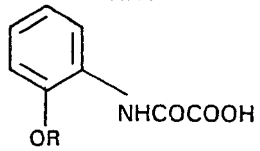
(VII)

ausgehen, die man in die Säurechloride überführt, und diese dann mit einem Amin der Formel (IV) bzw. mit 4-Amino- und/oder 5-Aminoindan umsetzt. Die Oxamidsäuren (VI) bzw. (VII) erhält man in an sich bekannter Weise durch Hydrolyse der Oxamidsäureester (III) bzw. (V) oder direkt aus dem entsprechenden aromatischen Amin und Oxalsäure.

Ein weiteres Verfahren zur Herstellung von erfindungsgemässen Verbindungen der Formel I ist dadurch gekennzeichnet, dass man die auf einem der oben beschriebenen Wege erhaltene Verbindungen der Formel (VIII)

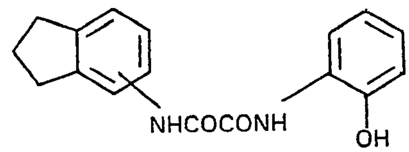
(VIII)

mit einem Alkylhalogenid, Alkylsulfat oder Arylsulfonylalkylester in üblicher Weise alkyliert.

Die als Ausgangsstoffe verwendeten aromatischen Amine sind bekannt oder können in an sich bekannter Weise hergestellt werden. Beispielsweise sind die Synthese und die Trennung von 4-Amino- und 5-Aminoindan in Mh. Chem. 105, 1362 (1974) beschrieben. o-Aminoalkoxybenzole können beispielsweise nach den in J. Amer. Chem. Soc. 37, 1567 (1935) genannten Verfahren erhalten werden.

Die erfindungsgemässen Oxalsäurebisarylamide können zum Schutz und zur Stabilisierung organischer polymerer Materialien dienen, die durch Einwirkung ultravioletter Strahlen in irgendeiner Form geschädigt oder zerstört werden. Solche Polymere sind beispielsweise Polyolefine, Polystyrol, Styrolpolymerisate, halogenhaltige Vinylpolymere, Polyacrylate, Polymethacrylate, Polyacrylamide, Polyacrylnitril, Polyvinylalkohol und dessen Acylderivate, Polyacetate, Polyalkylenoxide, Polyphenylenoxide, Polyurethane und Polyharnstoffe, Polysulfone, Polyamide, Polyester, Polycarbonate, vernetzte Polymere aus Aldehyden und Phenolen, Harnstoff oder Melamin, ungesättigte Polyesterharze, Alkydharze, duroplastische und thermoplastische Acrylharze.

Zum Schutz von halogenhaltigen Vinylpolymeren sind Verbindungen der Formel (I), in der R Methyl oder Ethyl ist, bevorzugt. Sie zeigen insbesondere in den verschiedenen bekannten PVC-Rezepturen eine sehr gute Stabilisierungswirkung.

Zur Stabilisierung von Polyolefinen werden vorzugsweise Verbindungen der Formel (I), in der R lineares $C_{10}$- bis $C_{12}$-Alkyl ist, verwendet. Diese zeigen beispielsweise in Polyolefinen wie Polyethylen und Polypropylen gegenüber Verbindungen des Standes der Technik eine erhöhte Verträglichkeit. Weiterhin weisen die neuen Verbindungen eine sehr geringe Flüchtigkeit auf. Diese Eigenschaft ist sehr wichtig, da bei den hohen Verarbeitungsgeschwindigkeiten zwangsweise hohe Verarbeitungstemperaturen erforderlich sind.

Verbindungen der Formel (I), in der R lineares $C_8$- bis $C_{12}$-Alkyl ist, sind auch hervorragend zur Stabilisierung von Industrielackierungen, beispielsweise von Zweischicht-Metallic-Lackierungen geeignet. Durch den Zusatz von (I) wird deren Gebrauchsechtheit, insbesondere wird die Licht- und Wetterechtheit von pigmentierten Industrielackierungen deutlich verbessert.

Als Lacke kommen alle in der Industrielackierung verwendeten Arten in Frage. Insbesondere sind zusammen mit den neuen UV-Absorbern Lacke verwendbar, die z.B. Bindemittel auf der Basis ölmodifizierte Polyesterharze (Ölalkydharze) und Melaminharze, fremdvernetzende Polyacrylatharze und Melaminharze, gesättigte Polyester und Melaminharze oder auf der Basis selbstvernetzender Polyacrylatharze enthalten. Ausserdem kommen z.B. Zweikomponenten-Acrylatharzlacke bestehend aus hydroxylgruppenhaltigem Acrylatharz und aliphatischen und/oder aromatischen Isocyanaten in Betracht, wie thermoplastische Polyacrylatharzlacke. Weiterhin sind auch Zweikomponenten-Polyurethanharzlacke auf der Basis hydroxylgruppenhaltiger Polyesterharze und/oder Polyetherharze zu nennen, die mit aliphatischen oder aromatischen Isocyanaten gehärtet werden. Für Metallic-Lacke sind von Bedeutung: thermoplastische Polyacrylatharze oder fremdvernetzende Polyacrylatharze in Kombination mit Butanol-veretherten Melaminharzen, ausserdem hydroxylgruppenhaltige Polyacrylatharze, die mit aliphatischen Isocyanaten gehärtet werden.

Die neuen Stabilisatoren (I) werden nach den üblichen Methoden in die Polymermassen eingearbeitet. Die Einarbeitung kann beispielsweise durch Einmischen der Verbindungen und gegebenenfalls weiterer Additive in die Schmelze nach den in der Technik üblichen Methoden vor oder während der Formgebung, oder auch durch Aufbringen der gelösten oder dispergierten Verbindungen auf das Polymere direkt oder durch Einmischen in eine Lösung, Suspension oder Emulsion des Polymeren, gegebenenfalls unter nachträglichem Verdunstenlassen des Lösungsmittels, erfolgen. Die Mengen an (I) liegen in der Regel bei 0,01 bis 5, vorzugsweise bei 0,05 bis 2,5 und insbesondere bei 0,1 bis 2 Gew.-%, bezogen auf das stabilisierende Material. Die neuen Verbindungen können auch in Form eines Masterbatches, der diese Verbindungen beispielsweise in einer Konzentration von 2,5 bis 50, vorzugsweise 5,0 bis 20 Gew.-% enthält, den zu stabilisierenden Kunststoffen zugesetzt werden.

Bei der Anwendung in Lacken, kann die Zugabe der erfindungsgemässen Verbindungen (I) auf einer beliebigen Stufe der Lackherstellung erfolgen. Die Stabilisierung von Zweischicht-Metallic-Lackierungen kann durch Zugabe der Oxamide zum Grundlack und/oder zum Klarlack erfolgen.

Die mit den Verbindungen (I) stabilisierten polymeren Mischungen können gegebenenfalls 0,1 bis 5 Gew.-%, vorzugsweise 0,5 bis 3 Gew.-% noch an weiteren üblichen Zusatzstoffen enthalten, wie Antioxydantien, Lichtstabilisatoren, oder deren Gemische. Solche Zusatzstoffe sind z.B.: Antioxydantien, UV-Absorber und Lichtschutzmittel wie 2-(2'-Hydroxyphenyl)-benztriazole, 2,4-Bis-(2'-hydroxyphenyl)-6-alkyl-s-triazine, 2-Hydroxybenzophenone, 1,3-Bis-(2'-hydroxybenzoyl)-benzole, Ester von gegebenenfalls substituierten Benzoesäuren, Acrylate, ausserdem Nickelverbindungen, sterisch gehinderte Amine, andere von (I) verschiedene Oxalsäurediamide, Metalldesaktivatoren, Phosphite, peroxidzerstörende Verbindungen, Polyamidstabilisatoren, basische Co-Stabilisatoren, Nukleierungsmittel und sonstige Zusätze wie Weichmacher, Gleitmittel, Emulgatoren, Füllstoffe, Russ, Asbest, Kaolin, Talk, Glasfasern, Pigmente, optische Aufheller, Flammschutzmittel, Antistatica.

Die Erfindung soll durch die folgenden Beispiele zusätzlich erläutert werden. Die im folgenden genannten Prozentangaben beziehen sich auf das Gewicht.

*Beispiel 1*

Zu einer Lösung von 37 g eines Gemisches von 4- und 5-Aminoindan in 80 g trockenem Dimethylformamid und 33 g Triethylamin tropfte man bei 0 bis 10°C 41,2 g Oxalsäureethylesterchlorid, dann rührte man noch eine Stunde bei 10°C und 12 Stunden bei Raumtemperatur nach. Anschliessend wurde das Reaktionsgemisch auf 400 g Eis ausgetragen. Die Fällung wurde abgesaugt, mit Wasser gut gewaschen und auf Ton getrocknet. Man erhielt in nahezu quantitativer Ausbeute ein Gemisch der Oxalsäureesteramide der Formeln

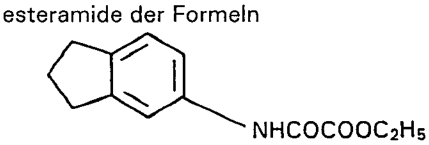

und

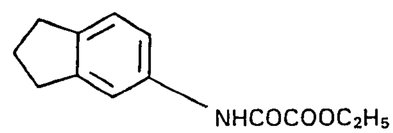

vom Schmp. 56 bis 57°C. Zur Analyse wurde aus Isopropanol/Wasser (etwa 1:1) umkristallisiert. (Schmp. 63 bis 64°C). Analyse:

$C_{13}H_{15}NO_3$ (233)

| | | | | |
|---|---|---|---|---|
| ber. | C 66,94 | H 6,48 | N 6,00 | O 20,58% |
| gef. | C 66,9 | H 6,6 | N 6,0 | O 20,7 % |

*Beispiel 2*

74 g 5-Aminoindan und 82,5 g Oxalsäureethylesterchlorid wurden analog Beispiel 1 umgesetzt. Man erhielt 126 g rohes Oxalsäureesteramid der Formel

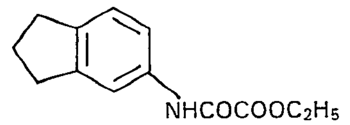

vom Schmp. 58 bis 60°C. Zur Analyse wurde aus Isopropanol/Wasser (etwa 1:1) umkristallisiert. (Schmp. 69 bis 70°C). Analyse:

$C_{13}H_{15}NO_3$ (233)

| | | | | |
|---|---|---|---|---|
| ber. | C 66,94 | H 6,48 | N 6,00 | O 20,58% |
| gef. | C 67,3 | H 6,5 | N 6,0 | O 20,6 % |

*Beispiel 3*

Zu einer Lösung von 24,6 g 2-Methoxyanilin in 240 g trockenem Dimethylformamid und 24 g Triethylamin tropfte man bei 0 bis 10°C 32 g Oxalsäureethylesterchlorid. Man rührte noch 1 Stunde bei 10°C und 12 Stunden bei Raumtemperatur nach. Anschliessend wurde die Reaktionsmischung auf 200 g Eis ausgetragen. Die Fällung wurde abgesaugt, mit Wasser gut gewaschen und auf Ton getrocknet. Man erhielt 42 g des Oxalsäureethylester-amids der Formel

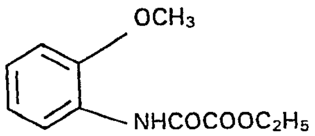

vom Schmp. 87 bis 88°C. Das Rohprodukt wurde ohne Reinigung weiterverarbeitet.

*Beispiel 4*

Eine Mischung aus 29,4 g Oxalsäureethylester--(2-methoxyphenyl)-amid (Beispiel 3), 17,5 g 5--Aminoindan und 1 ml Bortrifluoridetherat wurde 4 Stunden auf 170°C erhitzt. Das während der Reaktion gebildete Ethanol wurde kontinuierlich durch Destillation entfernt. Nach dem Abkühlen auf ca. 80°C wurden tropfenweise 120 ml Ethanol zugegeben und unter Rühren auf Raumtemperatur abkühlen gelassen. Der Niederschlag wurde abgesaugt und mit Ethanol und Ether gewaschen. Er wurde in Ethanol/Dimethylformamid (1:1 Gew.-Teile) warm gelöst und nach Zusatz von Aktivkohle filtriert. Das Filtrat wurde mit Wasser versetzt, bis Kristallisation eintrat. Nach dem Abkühlen wurde abgesaugt, das Filtergut mit Ethanol gewaschen und getrocknet. Ausbeute: 18 g des Oxalsäureamids der Formel

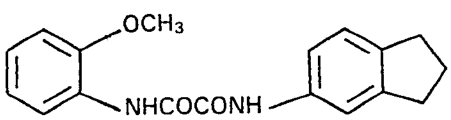

Schmp. 125 bis 127°C. Analyse:
$C_{18}H_{18}N_2O_3$ (310)

| | | | | |
|---|---|---|---|---|
| ber. | C 69,66 | H 5,85 | N 9,03 | O 15,4% |
| gef. | C 70,3 | H 5,9 | N 9,0 | O 14,8% |

*Beispiel 5*

20,5 g 2-Ethoxyanilin und 24,5 g Oxalsäureethylesterchlorid wurden in 180 g trockenem Dimethylformamid und 18 g Triethylamin analog Beispiel 3 umgesetzt. Ausbeute: 27 g des Oxalsäureethylesteramids der Formel

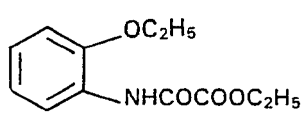

Schmp. 78 bis 81°C. Das Rohprodukt wurde ohne Reinigung weiterverarbeitet.

*Beispiel 6*

Eine Mischung aus 59,2 g Oxalsäureethylester--(2-ethoxyphenyl)-amid (Beispiel 5), 33,2 g 5--Aminoindan und 2,5 ml Bortrifluoridetherat wurden analog Beispiel 4 umgesetzt. Nach Abkühlen auf ca. 80°C setzte man tropfenweise 50 ml Ethanol zu, erhitzte noch 30 Minuten zum Sieden und liess auf Raumtemperatur abkühlen. Der Niederschlag wurde abgesaugt, gründlich mit Methanol gewaschen und getrocknet. Ausbeute: 49,2 g des Oxalsäureamids der Formel

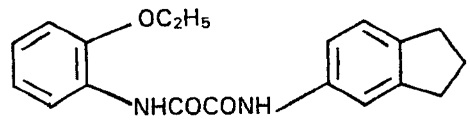

Schmp. 126 bis 128°C. Analyse:
$C_{19}H_{20}NO_3$ (324)

| | | | | |
|---|---|---|---|---|
| ber. | C 70,35 | H 6,21 | N 8,64 | O 14,80% |
| gef. | C 70,3 | H 6,2 | N 8,8 | O 14,8 % |

*Beispiel 7*

Eine Mischung aus 35,7 g Oxalsäureethylester--(2-ethoxyphenyl)-amid (Beispiel 5), 20,1 g 4- und 5-Aminoindan-Gemisch sowie 0,5 ml Bortrifluoridetherat wurden analog Beispiel 4 umgesetzt. Nach Abkühlen auf ca. 100°C setzte man tropfenweise 60 ml Isopropanol zu und liess unter Rühren auf Raumtemperatur erkalten. Der Niederschlag wurde abgesaugt und mit Isopropanol gewaschen. Nach Umkristallisation aus Isopropanol erhielt man 22,1 g eines Gemisches der Oxalsäureamide der Formeln

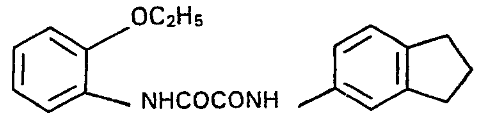

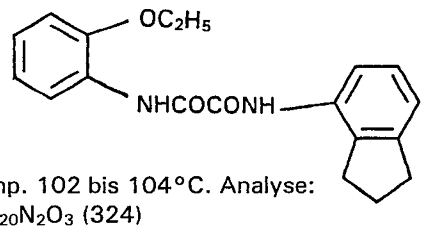

Schmp. 102 bis 104°C. Analyse:
$C_{19}H_{20}N_2O_3$ (324)

| | | | | |
|---|---|---|---|---|
| ber. | C 70,35 | H 6,21 | N 8,64 | O 14,80% |
| gef. | C 70,7 | H 6,4 | N 8,5 | O 15,0 % |

*Beispiel 8*

Eine Mischung aus 23,3 g der Oxalsäureethylesteramide der Formeln

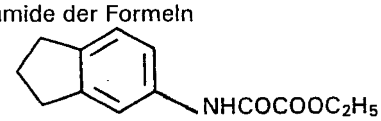

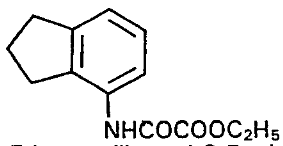,

14 g 2-Ethoxyanilin und 0,5 ml Bortrifluoridetherat wurde unter kontinuierlichem Abdestillieren des gebildeten Ethanols 4 Stunden auf 170°C erhitzt. Nach Abkühlen auf ca. 100°C setzte man 80 ml Isopropylalkohol zu und liess unter Rühren auf Raumtemperatur erkalten. Der Niederschalg wurde abgesaugt, mit Isopropylalkohol und Hexan gewaschen und getrocknet. Ausbeute: 23,5 g eines Gemisches der Oxalsäureamide der Formeln

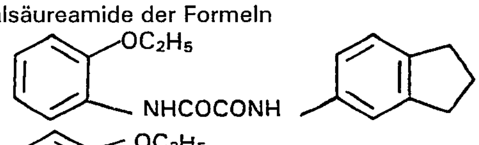

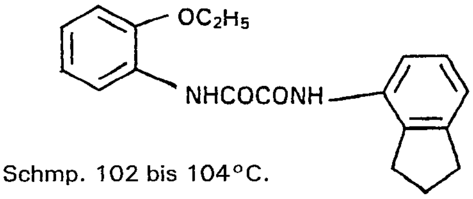

Schmp. 102 bis 104°C.

*Beispiel 9*

23,3 g einer Mischung aus Oxalsäureesteramiden der Formeln

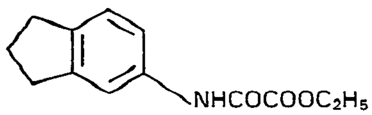

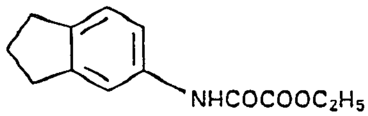

,

16,1 g 2-Butoxyanilin und 0,5 ml Bortrifluoridetherat wurden analog Beispiel 4 umgesetzt. Nach üblicher Aufarbeitung und Kristallisation des Rohproduktes aus Ethanol erhielt man 11 g eines Gemisches der Oxalsäureamide der Formeln

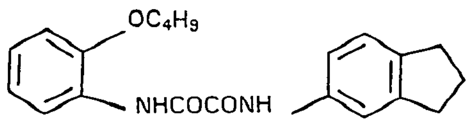

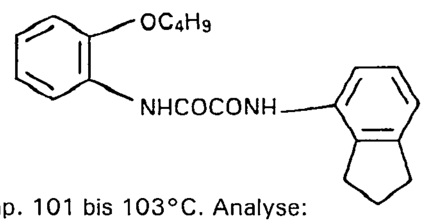

Schmp. 101 bis 103°C. Analyse:
$C_{21}H_{24}N_2O_3$ (352)

| | | | | |
|---|---|---|---|---|
| ber. | C 71,57 | H 6,86 | N 7,95 | O 13,62% |
| gef. | C 71,2 | H 6,7 | N 8,5 | O 13,8 % |

*Beispiel 10*

23,3 g einer Mischung aus Oxalsäureesteramiden der Formel

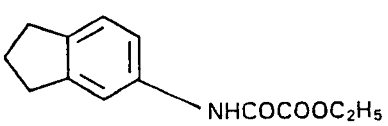

und

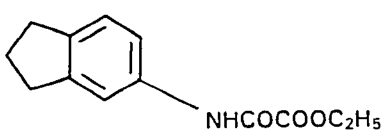

,

22,1 g 2-Octoxyanilin und 0,5 ml Bortrifluoridetherat wurden analog Beispiel 8 umgesetzt. Nach Umkristallisation aus Isopropanol erhält man 6,3 g eines Gemisches von

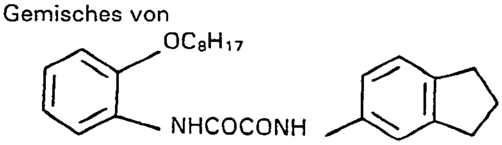

und

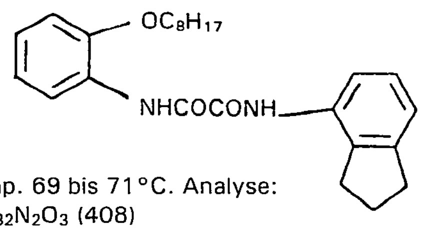

Schmp. 69 bis 71°C. Analyse:
$C_{25}H_{32}N_2O_3$ (408)

| | | | | |
|---|---|---|---|---|
| ber. | C 73,49 | H 7,89 | N 6,85 | O 11,74% |
| gef. | C 73,7 | H 7,7 | N 6,9 | O 11,6 % |

*Beispiel 11*

23,3 g einer Mischung aus Oxalsäureesteramiden der Formel

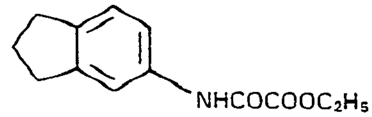

und

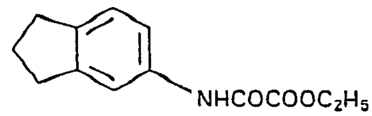

,

24,9 g 2-Decoxyanilin und 0,5 ml Bortrifluoridetherat wurden analog Beispiel 8 umgesetzt. Nach Kristallisation aus n-Propanol erhielt man 18 g eines Gemisches das aus Oxalsäureamiden der Formeln

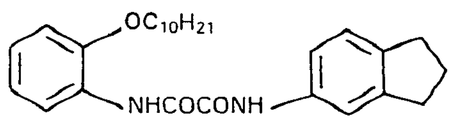

und

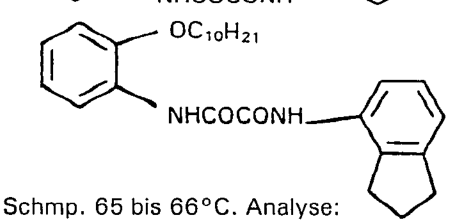

Schmp. 65 bis 66°C. Analyse:
$C_{27}H_{36}N_2O_3$ (436)

| | | | | |
|---|---|---|---|---|
| ber. | C 74,28 | H 8,31 | N 6,42 | O 10,99% |
| gef. | C 73,9 | H 8,0 | N 6,9 | O 11,3 % |

*Beispiel 12*

23,3 g einer Mischung aus Oxalsäureesteramiden der Formel

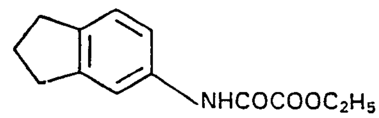

und

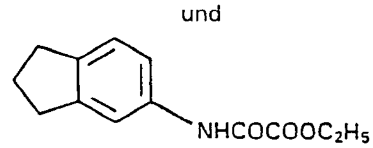

,

27,7 g 2-Dodecoxyanilin und 0,5 ml Bortrifluoridetherat wurden analog Beispiel 8 umgesetzt. Die nach Verdünnen mit Isopropanol erhaltene Fällung wurde abgesaugt, mit wenig Methanol gewaschen und getrocknet. Man erhielt 23,1 g eines Gemisches, das Oxalsäureamide der Formel

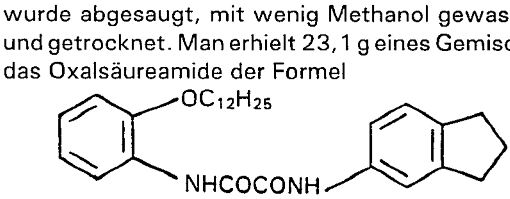

und

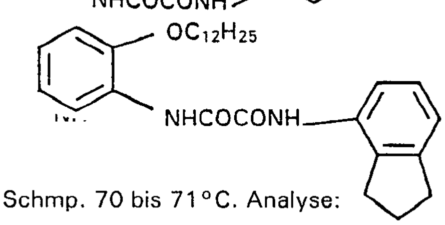

enthält. Schmp. 70 bis 71°C. Analyse:

$C_{29}H_{40}N_2O_3$ (464)

| | | | | |
|---|---|---|---|---|
| ber. | C 75,0 | H 8,68 | N 6,03 | O 10,33% |
| gef. | C 75,0 | H 8,6 | N 5,9 | O 10,3 % |

*Anwendungsbeispiele 1 bis 4*
Migrationstest

a) In Polyethylen (PE) und Polypropylen (PP) wurden je 0,25%, bezogen auf das Polyolefin, der in der folgenden Tabelle angegebenen Oxalsäurediarylamide durch zweimaliges Extrudieren eingearbeitet.

b) Auf einem Laborwalzenstuhl wurden in PVC 0,25%, bezogen auf PVC, der in der folgenden Tabelle angegebenen Oxalsäurediarylamide eingearbeitet.

Nach 14tägiger Lagerung bei 25°C wurde geprüft, ob die Oberfläche der Plättchen einen Belag aufweist.

Die Ergebnisse sind in der Tabelle zusammengestellt.

| Anwendungsbeispiel | Oxalsäureamid aus Beisp. | Migrationstest PE | PP | PVC |
|---|---|---|---|---|
| 1 | 4 | + | + | — |
| 2 | 6 | + | + | — |
| 3 | 11 | — | — | — |
| 4 | 12 | — | — | — |

\+ = Belag auf der Oberfläche
— = kein Belag

*Anwendungsbeispiel 5*
Prüfung auf stabilisierende Wirkung in PE

In PE wurden durch zweimaliges Extrudieren auf einem Weber-Labor-Extruder bei 180°C 0,25%, bezogen auf PE, des nach Beispiel 11 hergestellten Gemisches von Oxalsäurediarylamiden eingearbeitet. Das Granulat wurde bei 180°C zu einem 200 µm Probeplättchen gepresst. An diesem Plättchen wurde in einem Xenotest-Gerät 1200 die Bewitterungsstabilität (Alterung) ermittelt.

Die Alterung wurde durch Messen der «CO-Zahl» und der Reissdehnung im Zugversuch (DIN 53 455) nach bestimmten Zeitintervallen bestimmt:

| Bewitterungszeit (h) | «CO-Zahl» | Reissdehnung (%) |
|---|---|---|
| 0 | 0,40 | 555 |
| 1000 | 1,05 | 620 |
| 2000 | 1,90 | 570 |
| 3000 | 6,40 | 580 |
| 4000 | 10,00 | 540 |

*Anwendungsbeispiel 6*
Prüfung auf stabilisierende Wirkung in PE

Es wurde wie im Anwendungsbeispiel 5 verfahren, jedoch wurde anstelle des in Beispiel 11 angegebenen das nach Beispiel 12 hergestellte Gemisch von Oxalsäurediarylamiden verwendet:

| Bewitterungszeit (h) | «CO-Zahl» | Reissdehnung (%) |
|---|---|---|
| 0 | 0,4 | 606 |
| 1000 | 0,85 | 592 |
| 2000 | 1,45 | 580 |
| 3000 | 5,10 | 600 |
| 4000 | 9,30 | 570 |

*Anwendungsbeispiel 7 und 8*
Stabilisatorverträglichkeit in PVC

In Barium- und Cadmiumstabilisatoren enthaltendem PVC wurde auf einer Schwabenthan-Walze (160°C; Spalt: 0,3 mm, n = 32 $min^{-1}$) je 0,25% der in der folgenden Tabelle angegebenen Oxalsäurediarylamide eingearbeitet.

Aus den Walzfellen wurden auf einer Laborpresse (160°C) 60 × 42 mm grosse und 1 mm dicke Platten hergestellt. Die Platten wurden im Xenotest-Gerät 1200 bewittert. Die Platten wurden in bestimmten Zeitabständen visuell auf Farbtonveränderungen geprüft und im Vergleich zur unbelichteten Probe beurteilt.

Die Ergebnisse sind in der Tabelle zusammengestellt:

| Oxalsäurediarylamid aus Beisp. | visuelle Beurteilung nach Bewitterung 100 | 500 | 1000 h |
|---|---|---|---|
| 4 | keine | keine | keine Veränderung |
| 6 | keine Veränderung | keine Veränderung | minimaler Gelbstich |

*Anwendungsbeispiele 9 bis 11*
Bewitterungsstabilität im Zweischicht-Metallic-Lack

In den Base-Coat wurden, bezogen auf den Base-Coat, 2% der in der folgenden Tabelle angegebenen Oxalsäurediarylamide eingearbeitet. Der Base-Coat wurde auf ein grundiertes Blech gespritzt und nach dem Ablüften wurde mit dem Clear-Coat überspritzt. Nach dem Ablüften wurde die Lackierung eingebrannt.

Die Lackierungen wurden in einem QUV-Schnellbewitterungsgerät der Fa. Q-Panel Company bewittert. Dabei wird die schädigende Wirkung des Sonnenlichts durch UV-Leuchtstofflampen, Regen und Tau durch ein Bestäubungssystem simuliert.

Die Beurteilung erfolgte nach 2000 Stunden anhand der Grauskala (DIN 54 001).

In der Tabelle sind die Ergebnisse zusammengefasst:

| Anwendungsbeispiel | Oxalsäurediarylamid aus Beisp. | Farbtonänderung nach 2000 h | |
|---|---|---|---|
| 9 | 10 | 4-5 | praktisch unverändert |
| 10 | 11 | 4-5 | |
| 11 | 12 | 4-5 | |

**Patentansprüche**

1. Oxalsäurediarylamide der Formel

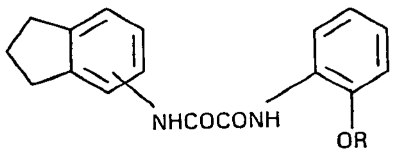

(I),

in der R lineares oder verzweigtes $C_1$- bis $C_{12}$-Alkyl bedeutet.

2. Diarylamide gemäss Anspruch 1, dadurch gekennzeichnet, dass in der Formel R für Methyl, Ethyl steht.

3. Diarylamide gemäss Anspruch 1, dadurch gekennzeichnet, dass R für lineares $C_8$- bis $C_{12}$-Alkyl steht.

4. Diarylamide gemäss Anspruch 3, dadurch gekennzeichnet, dass R für n-Octyl, n-Decyl oder n-Dodecyl steht und die Oxalsäureamidgruppe in der 4- oder 5-Stellung am Indan steht.

5. Verwendung der Oxalsäurediarylamide gemäss den Ansprüchen 1 bis 4 als UV-Absorber und Lichtschutzmittel in polymeren Materialien.

6. Verwendung der Oxalsäurediarylamide gemäss Anspruch 2 zur Stabilisierung von Halogen enthaltenden Polymeren.

7. Verwendung der Oxalsäurediarylamide gemäss Anspruch 3 oder 4 zur Stabilisierung von Polyolefinen und Lacken.

8. Verwendung der Oxalsäurediarylamide gemäss den Ansprüchen 5, 6 oder 7, dadurch gekennzeichnet, dass 0,1 bis 5 Gew.-%, bezogen auf das zu stabilisierende Material; an den Oxalsäurediamiden angewendet werden.

9. Polymeres Material stabilisiert mit mindestens einem Oxalsäurediarylamid gemäss den Ansprüchen 1 bis 4.

**Claims**

1. An oxalic acid diarylamide of the formula

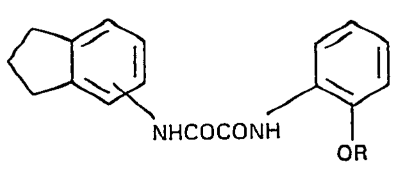

(I),

where R is straight-chain or branched $C_1$-$C_{12}$-alkyl.

2. A diarylamide as claimed in claim 1, wherein, in the formula, R is methyl or ethyl.

3. A diarylamide as claimed in claim 1, wherein R is straight-chain $C_8$-$C_{12}$-alkyl.

4. A diarylamide as claimed in claim 3, wherein R is n-octyl, n-decyl or n-dodecyl, and the oxamide group is in the 4- or 5-position on indane.

5. The use of an oxalic acid diarylamide as claimed in claims 1 to 4 as UV absorber and light stabilizer in polymeric materials.

6. The use of an oxalix acid diarylamide as claimed in claim 2 for stabilizing halogen-containing polymers.

7. The use of an oxalic acid diarylamide as claimed in claim 3 or 4 for stabilizing polyolefins and surface coatings.

8. The use of an oxalic acid diarylamide as claimed in claim 5, 6 or 7, wherein from 0.1 to 5% by weight, based on the material to be stabilized, of the oxalic acid diarylamide is employed.

9. A polymeric material stabilized with one or more oxalic acid diarylamides as claimed in claims 1 to 4.

**Revendications**

1. Diarylamides d'acide oxalique de formule

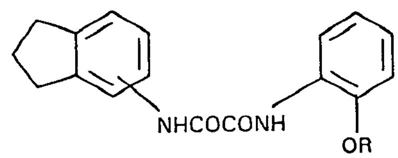

(I),

dans laquelle R représente un radical alkyle linéaire ou ramifié en $C_1$ à $C_{12}$.

2. Diarylamides selon la revendication 1, caractérisés en ce que dans la formule, R est mis pour un radical méthyle ou éthyle.

3. Diarylamides selon la revendication 1, caractérisés en ce que R est mis pour un radical alkyle linéaire en $C_8$ à $C_{12}$.

4. Diarylamides selon la revendication 3, caractérisés en ce que R est mis pour un radical n-octyle, n-décyle ou n-dodécyle et le groupement amide d'acide oxalique est dans la position 4 ou 5 sur l'indane.

5. Utilisation des diarylamides d'acide oxalique selon l'une quelconque des revendications 1 à 4 comme absorbant de l'UV et agent de protection contre la lumière dans des matières polymères.

6. Utilisation des diarylamides d'acide oxalique selon la revendication 2 pour la stabilisation de polymères contenant des halogènes.

7. Utilisation des diarylamides d'acide oxalique selon la revendication 3 ou 4 pour la stabilisation de polyoléfines et de laques.

8. Utilisation des diarylamides d'acide oxalique selon l'une quelconque des revendications 5 à 7, caractérisée en ce qu'il est utilisé 0,1 à 5% en poids des diarylamides d'acide oxalique par rapport à la matière à stabiliser.

9. Matière polymère stabilisée avec au moins un diarylamide d'acide oxalique selon l'une quelconque des revendications 1 à 4.